# EUROPÄISCHE PATENTSCHRIFT

(11) **EP 3 649 451 B1**
(45) Veröffentlichungstag und Bekanntmachung des Hinweises auf die Patenterteilung: **22.05.2024**
(21) Anmeldenummer: 18765544.4
(22) Anmeldetag: 07.07.2018
(51) Int. Cl.: G01L 25/00, G01L 3/10

(54) **DOPPELFLANSCH-DREHMOMENTAUFNEHMERANORDNUNG MIT SICHERHEITSFUNKTION UND DREHMOMENTMESSVERFAHREN**
DOUBLE FLANGE TORQUE TRANSDUCER ASSEMBLY WITH A SAFETY FUNCTION AND TORQUE MEASURING METHOD
ENSEMBLE ENREGISTREUR DE COUPLE DE ROTATION À DOUBLE BRIDE PRÉSENTANT UNE FONCTION DE SÉCURITÉ, ET PROCÉDÉ DE MESURE DE COUPLE DE ROTATION

(30) Priorität: 07.07.2017 DE 102017006419
(43) Veröffentlichungstag der Anmeldung: 13.05.2020
(73) Patentinhaber: Hottinger Brüel & Kjaer GmbH, 64293 Darmstadt (DE)
(72) Erfinder: ANDRAE, Jürgen, 64331 Weiterstadt (DE); HALLER, Markus, 64331 Weiterstadt (DE); MARKERT, Florian, 63128 Dietzenbach (DE)
(74) Vertreter: Müller, Thomas
(86) Internationale Anmeldenummer: PCT/DE2018/000206
(87) Internationale Veröffentlichungsnummer: WO 2019/007451

(56) Entgegenhaltungen:
- US-A- 3 049 003
- US-A- 3 049 003
- US-A1- 2016 299 019
- US-A1- 2016 299 019

## Beschreibung

Die Erfindung betrifft eine Doppelflansch-Drehmomentaufnehmeranordnung, die insbesondere in sicherheitsrelevanten Bereichen einsetzbar ist und ein Drehmomentmessverfahren, welches bevorzugt mit der Doppelflansch-Drehmomentaufnehmeranordnung ausführbar ist.

Drehmomentaufnehmer der Flanschtype sind aus dem Stand der Technik bekannt und nutzen als Sensor z. B. Dehnungsmessstreifen. Drehmomentaufnehmer mit Dehnungsmessstreifen ermöglichen sehr genaue Messungen des Drehmoments und werden u. a. zur exakten Reglung hochtouriger Turbinen eingesetzt. Neben der hohen Messgenauigkeit werden oft noch eine hohe Zuverlässigkeit und ein geringes Gewicht gefordert. Die Forderung nach einer hohen Zuverlässigkeit ergibt sich daraus, dass beim Ausfall des Drehmomentaufnehmers keine Systemreglung mehr möglich ist und die Maschine, Turbine oder Anlage beschädigt werden könnte. Wenn eine solche Forderung besteht ist es üblich, diese Messsysteme redundant auszulegen. In solchen Fällen, bei denen das Gewicht und speziell das Massenträgheitsmoment des Drehmomentaufnehmers unerheblich sind, können z.B. zwei Drehmomentaufnehmer hintereinandergeschaltet werden. Wie vorstehend erwähnt, kommt es aber häufig darauf an, die Masse und das Bauvolumen des Drehmomentaufnehmers möglichst gering zu halten.

Diese Anforderungen sind auch in dem Dokument DE 102009016105 A1 gestellt. Die darin beschriebene technische Lösung bezieht sich auf ein Verfahren und eine Vorrichtung zum Messen der Beanspruchung rotierender Wellen von Turbomaschinen und Flugtriebwerken. Um die Nachteile bekannter Verfahren und Vorrichtungen dieser Art zu vermeiden, die eine Mehrzahl von Bauteilen an der rotierenden Welle benötigen, sieht diese Konstruktion vor, dass an der Welle eine magnetische Kodierung vorgesehen ist, die als Signalgeber wirkt und die ein Signal für die auf die Welle einwirkende Beanspruchung erzeugt und dieses Signal von Signalsensoren erkannt und ausgewertet wird. Die mit dieser Anordnung erzielbare Messgenauigkeit ist jedoch geringer als bei einer Messung mit Dehnungsmessstreifen.

Es gibt oft folgenden Einsatzfall: Wenn sich eine Maschine auf Grund eines Ausfalls des Drehmomentaufnehmers nicht mehr regeln lässt, soll sie zumindest heruntergefahren werden können. Beim Herunterfahren einer Maschine müssen manchmal sogenannte kritische Drehzahlbereiche durchfahren werden. In diesen kritischen Drehzahlbereichen neigt die Maschine zu Eigenresonanz. Bei einem einfachen Abschalten würde die Maschine unkontrolliert die kritischen Drehzahlbereiche durchlaufen und es kann zu den unerwünschten Resonanzen kommen. Es ist daher notwendig, die Maschine so zu regeln, dass keine unerwünschten Resonanzen auftreten. Die dazu nötigen Messsignale müssen keine besonders hohe Genauigkeit aufweisen. Demzufolge wäre ein redundant geschalteter Drehmomentaufnehmer mit geringerer Genauigkeit geeignet, die an eine derartige Notregelung gestellten Bedingungen zu erfüllen, insbesondere das Durchfahren kritischer Drehzahlbereiche. Dieser zusätzliche Drehmomentaufnehmer sollte jedoch nur eine geringe Masse und auch ein geringes Bauvolumen aufweisen. Die Probleme beim Durchfahren von kritischen Drehzahlbereichen werden auch in dem Dokument EP 1908926 A1 diskutiert. Das Patentdokument US3049003 A beschreibt eine Anordnung zur Drehmomentmessung.

Somit besteht die Aufgabe der Erfindung in der Bereitstellung einer Drehmoment-Messanordnung mit einer hohen Messgenauigkeit, die jedoch bei Ausfall seiner Sensorik nicht zu einem Totalausfall führt, sondern lediglich zu einem Teilverlust an Genauigkeit. Weiterhin soll diese Messanordnung ein möglichst geringes Gewicht und auch geringes Bauvolumen aufweisen.

Diese Aufgabe wird mit einer Drehmoment-Messanordnung nach Anspruch 1 und einem Drehmomentmessverfahren nach Anspruch 3 gelöst.

Die Drehmoment-Messanordnung nach Anspruch 1 ist eine Doppelflansch-Drehmomentaufnehmeranordnung, die folgende Merkmale aufweist: ein Messelement, an dem Dehnungsmessstreifen befestigt sind, zwei parallel zueinander angeordnete scheibenförmige Befestigungsflansche, zwischen denen sich das Messelement erstreckt und die zusammen mit diesem einstückig gefertigt sind, und zwei Drehzahlmessvorrichtungen, wobei jedem der Befestigungsflansche eine Drehzahlmessvorrichtung zugeordnet ist.

Die Doppelflansch-Drehmomentaufnehmeranordnung weist nachfolgende Eigenschaften und Vorteile auf: Zur präzisen Messung des Betriebsdrehmoments wird ein Messelement mit Dehnungsmessstreifen verwendet. Es gibt zwei unabhängig voneinander arbeitende Drehzahlmessvorrichtungen, welche die aktuelle Drehzahl messen und gleichzeitig den Torsionswinkel zwischen den Befestigungsflanschen erfassen. Der Torsionswinkel ist die Messgröße, die als Notfall-Drehmoment-Messgröße verfügbar ist, wenn das Messelement zur Bereitstellung des Betriebsdrehmoments ausgefallen ist.

Die Drehzahlmessvorrichtungen bestehen aus je einer inkrementellen Geberanordnung, die pro Umdrehung eine Vielzahl von Impulsen bereitstellt, und einer dazu gehörenden Detektionseinheit zur Detektion dieser Impulse, um daraus die Drehzahl zu bestimmen.

Der Vorteil dieser Anordnung ist die Nutzung der zwei Drehzahlmessvorrichtungen für mehrere Zwecke. Einerseits kann die Drehzahl redundant gemessen werden, was die Sicherheit der Reglung im Normalbetrieb erhöht. Andererseits kann ein Torsionswinkel bestimmt werden, dessen Größe dem anliegenden Drehmoment entspricht, wobei die Messgenauigkeit des Drehmoments mittels Torsionswinkel-Messung jedoch geringer ist als die Messgenauigkeit des Drehmoments, das mittels der Dehnungsmessstreifen ermittelt wird. Somit stehen zwei unabhängige Drehmomentmessergebnisse und zwei unabhängige Drehzahlmessergebnisse zur Verfügung. Weiterhin kann auch aus den zwei unabhängigen Drehzahlmessergebnissen durch Mittelwertbildung eine genauere Drehzahl ermittelt werden, sodass dadurch in Verbindung mit dem genauen Drehmomentmessergebnis, das die Dehnungsmessstreifen zur Verfügung stellen, eine genauere Leistungsermittlung, z. B. einer Turbine möglich ist. Falls die Messung des Betriebsdrehmoments mittels der Dehnungsmessstreifen ausfällt, wird das Drehmomentmessergebnis genutzt, das aus dem Torsionswinkel abgeleitet werden kann. Dieses Drehmomentmessergebnis ist nicht so hoch aufgelöst wie das mittels Dehnungsmessstreifen ermittelte Drehmomentmessergebnis, es reicht aber hinsichtlich der Genauigkeit aus, um eine Maschine sicher herunter zu fahren.

Nach Anspruch 2 arbeiten die zwei Drehzahlmessvorrichtungen nach unterschiedlichen Messprinzipen. Durch diese Maßnahme wird die Robustheit des Gesamtsystems gegenüber Störgrößen erhöht, weil die beiden Messprinzipien auf bestimmte Störgrößen unterschiedlich reagieren. Wenn eine bestimmte Störgröße auftritt und dadurch eines der beiden Drehzahlmesssysteme gestört wird, ist die Wahrscheinlichkeit gering, dass die gleiche Störgröße auch das Drehzahlmesssystem stört, das nach einem anderen Messprinzip arbeitet.

Das Drehmomentmessverfahren nach Anspruch 3 weist unter Verwendung einer Doppelflansch-Drehmomentaufnehmeranordnung nach Anspruch 1 folgende Verfahrensschritte auf:
a. Messen eines ersten Drehmoments mittels des Messelements, das wenigstens einen Dehnungsmessstreifen aufweist,
b. Bestimmen eines zweiten Drehmoments mittels der beiden Drehzahlmessvorrichtungen,
c. Kalibrieren des aktuellen zweiten Drehmoments auf den aktuellen Wert des ersten Drehmoments,
d. Vergleichen, ob der Messwert des zweiten Drehmoments mit dem Messwert des ersten Drehmoments übereinstimmt; wenn das nicht der Fall ist, wird Verfahrensschritt c durchgeführt,
e. Falls mittels einer Überwachungs- und Schalteinheit eine Abnormität des aktuellen Drehmoments erkannt wird, erfolgt ein Abschalten des ersten

Drehmomentmesssignals und ein Zuschalten des zweiten Drehmomentmesssignals, das von den beiden Drehzahlmessvorrichtungen aus dem Torsionswinkels zwischen den Befestigungsflanschen ermittelt wird.

Die Erfindung wird nachfolgend mit Hilfe der beigefügten schematischen Zeichnungen näher erläutert:
- Fig. 1: zeigt schematisch eine perspektivische Ansicht einer Doppelflansch-Drehmomentaufnehmeranordnung,
- Fig. 2: zeigt schematisch einen Algorithmus zur Messwertermittlung.

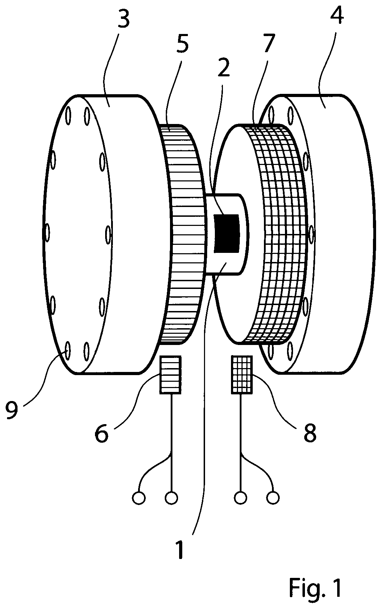

Die Fig. 1 zeigt eine Doppelflansch-Drehmomentaufnehmeranordnung, die folgende Merkmale aufweist: ein Messelement (1), an dem Dehnungsmessstreifen (2) befestigt sind. Dieses Messelement (1) besteht aus Federstahl und ist mit zwei parallel zueinander angeordneten scheibenförmigen Befestigungsflanschen (3, 4) einstückig gefertigt. Jedem der beiden Befestigungsflansche (3, 4) ist eine Drehzahlmessvorrichtung (5, 6; 7, 8) zugeordnet. Im vorliegenden Beispiel arbeitet die Drehzahlmessvorrichtung (5, 6) nach einem optischen Abtastprinzip und die Drehzahlmessvorrichtung (7, 8) nach einem magnetischen Abtastprinzip. Durch Nutzung von zwei unterschiedlichen Messprinzipien wird aus Differenzen in der Drehzahlanzeige die Fehlfunktion oder der Ausfall einer der beiden Drehzahlmessvorrichtungen erkannt und dadurch eine höhere Sicherheit bei der Drehzahlmessung erreicht.

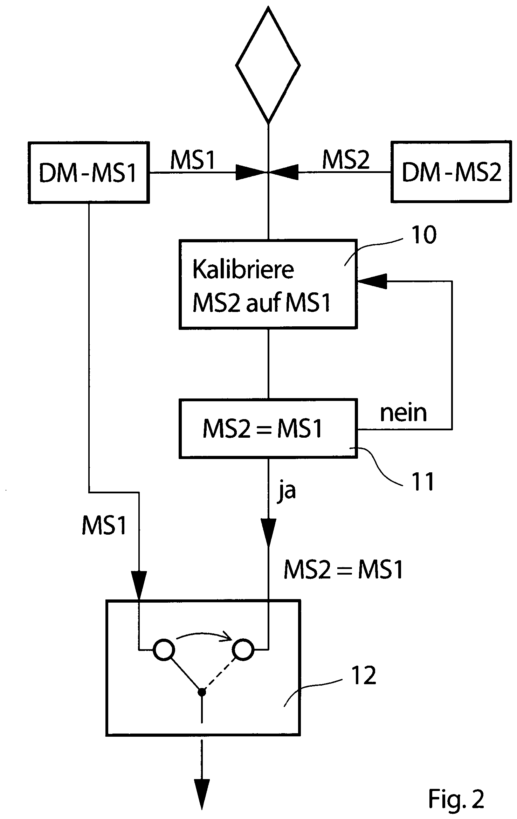

Diese Doppelflansch-Drehmomentaufnehmeranordnung weist nachfolgende Eigenschaften und Vorteile auf: Das Messelement (1) mit den Dehnungsmessstreifen (2) wird zur genauen Messung eines Betriebsdrehmoments genutzt und nachfolgend als Drehmoment-Geber (DM-MS1) bezeichnet. Parallel dazu ist aus den von den Drehzahlmessvorrichtungen ermittelten Drehzahlen ein Drehzahlmittelwert bildbar. Der vom Drehmoment-Geber (DM-MS1) ermittelte genaue Betriebsdrehmomentmesswert (MS1) und die aus den zwei Drehzahlmesswerten ermittelte Durchschnittsdrehzahl ermöglichen eine exakte Leistungsmessung z.B. an einer schnell laufenden Turbine. Weiterhin werden die beiden Drehzahlmessvorrichtungen (5, 6; 7, 8) zur Bestimmung des Torsionswinkels zwischen den beiden Befestigungsflanschen (3, 4) und somit als Drehmoment-Geber (DM-MS2) verwendet, sodass ein zweites Drehmomentmesssignal (MS2) bereitgestellt wird. Mittels einer Kalibriervorrichtung (10) wird dieses zweite und weniger genaue Drehmomentmesssignal (MS2) permanent mit dem genaueren Betriebsdrehmomentmesssignal (MS1) verglichen und auf dieses kalibriert. Diese Kalibrierung erfolgt im vorliegenden Beispiel alle 0,3 Sekunden. Somit ist sichergestellt, dass das zweite Drehmomentmesssignal (MS2) immer nahezu dem genauen Betriebsdrehmomentmesssignal (MS1) entspricht. Mittels einer Kontrollvorrichtung (11) wird die Wirkung der Kalibriervorrichtung (10) überwacht. Falls das Drehmomentmesssignal (MS2) noch nicht den Wert des Drehmomentmesssignals (MS1) erreicht hat, wird der Kalibrierschritt wiederholt. Weiterhin ist eine Vergleichs- und Schaltvorrichtung (12) vorgesehen, die permanent mit dem Messsignal (MS1) und dem kalibrierten Messsignal (MS2) gespeist wird. Falls die Vergleichs- und Schaltvorrichtung (12) eine vorbestimmte Abnormität des Messsignals (MS1) erkennt, schaltet die Vergleichs- und Schaltvorrichtung (11) das Messsignal (MS1) ab und auf das Messsignal (MS2) um und fährt in einem Not-Regel-Modus die Turbine oder Anlage in einen sicheren Betriebszustand oder zum Stillstand. Unter einer vorbestimmten Abnormität des Messsignals (MS1) wird ein abnormaler zeitlicher Verlauf des Messsignals (MS1) verstanden, der keiner realen Betriebssituation entsprechen kann, vergl. Fig. 2.

## Patentansprüche

1. Doppelflansch-Drehmomentaufnehmeranordnung mit Sicherheitsfunktion zur präzisen Messung eines Betriebsdrehmoments, wobei die Doppelflansch-Drehmomentaufnehmeranordnung folgende Merkmale aufweist:
- ein Messelement (1), an dem Dehnungsmessstreifen (2) befestigt sind,
- zwei parallel zueinander angeordnete scheibenförmige Befestigungsflansche (3, 4), zwischen denen das Messelement (1) sich erstreckt und die zusammen mit dem Messelement (1) einstückig gefertigt sind,
- eine erste und eine zweite Drehzahlmessvorrichtung (5, 6; 7,8), wobei jedem der Befestigungsflansche (3, 4) eine Drehzahlmessvorrichtung (5, 6; 7, 8) zugeordnet ist und
- eine Vergleichs- und Schaltvorrichtung (12), die permanent mit dem Messsignal (MS1) und dem kalibrierten Messsignal (MS2) gespeist wird.

2. Doppelflansch-Drehmomentaufnehmeranordnung nach Anspruch 1, wobei die erste Drehzahlmessvorrichtung (5, 6) nach einem anderen Messprinzip als die zweite Drehzahlmessvorrichtung (7, 8) arbeitet.

3. Drehmomentmessverfahren zur präzisen Messung eines Betriebsdrehmoments für eine Doppelflansch-Drehmomentaufnehmeranordnung nach Anspruch 1, wobei das Drehmomentmessverfahren nachfolgende Verfahrensschritte aufweist:
a. Messen eines ersten Drehmomentsignals (MS1) am Messelement (1),
b. Bestimmen eines zweiten Drehmomentsignals (MS2) aus dem von den Drehzahlmessvorrichtungen (5, 6; 7, 8) ermittelten Torsionswinkel zwischen den Befestigungsflanschen (3, 4),
c. Kalibrieren des aktuellen zweiten Drehmomentsignals (MS2) auf den aktuellen Wert des ersten Drehmomentsignals (MS1),
d. Vergleichen, ob der Wert des zweiten Drehmoments (MS2) mit dem Wert des ersten Drehmoments (MS1) übereinstimmt, wenn das nicht der Fall ist, wird Verfahrensschritt c wiederholt,
e. Prüfen auf Abnormitätsverhalten des ersten Drehmomentsignals (MS1), falls eine Abnormität des Drehmomentsignals (MS1) erkannt wird, erfolgt ein Abschalten des Drehmomentsignals (MS1) und ein Zuschalten des Drehmomentsignals (MS2).

## Claims

1. Double-flange torque transducer assembly with safety function for precise measurement of an operating torque, whereby the double-flange torque transducer assembly comprises the following features:
- a measuring element (1) to which strain gauges (2) are attached,
- two disc-shaped fastening flanges (3, 4) arranged parallel to one another, between which the measuring element (1) extends and which are manufactured in one piece together with the measuring element (1),
- a first and a second rotation speed measuring device (5, 6; 7, 8), wherein a rotation speed measuring device (5, 6; 7, 8) is associated with each of the mounting flanges (3, 4), and
- a comparison and switching device (12), which is permanently supplied with the measurement signal (MS1) and the calibrated measurement signal (MS2).

2. Double-flange torque transducer assembly according to claim 1, wherein
the first rotation speed measuring device (5, 6) operates according to a different measuring principle than the second rotation speed measuring device (7, 8).

3. Torque measuring method for the precise measurement of an operating torque for a double-flange torque transducer assembly according to claim 1, wherein the torque measuring method comprises the following method steps:
a. Measuring a first torque signal (MS1) at the measuring element (1),
b. Determining a second torque signal (MS2) from the torsion angle between the mounting flanges (3, 4) determined by the rotation speed measuring devices (5, 6; 7,8),
c. Calibrating the current second torque signal (MS2) on the current value of the first torque signal (MS1),
d. Comparing, whether the value of the second torque (MS2) matches the value of the first torque (MS1); if this is not the case, step c is repeated,
e. Checking for abnormal behaviour of the first torque signal (MS1), if an abnormality of the torque signal (MS1) is detected, the torque signal (MS1) is switched off and the torque signal (MS2) is switched on.

## Revendications

1. Ensemble enregistreur de couple de rotation à double bride avec fonction de sécurité pour la mesure précise d'un couple de fonctionnement, dans lequel l'ensemble enregistreur de couple de rotation à double bride présente les caractéristiques suivantes :
- un élément de mesure (1), auquel sont fixés des jauges de contrainte (2),
- deux brides de fixation (3, 4) en forme de disque agencées parallèlement l'une à l'autre, entre lesquelles l'élément de mesure (1) s'étend et qui sont fabriquées d'une seule pièce conjointement avec l'élément de mesure (1),
- un premier et un second dispositif de mesure de vitesse de rotation (5, 6 ; 7, 8), dans lequel un dispositif de mesure de vitesse de rotation (5, 6 ; 7,8) est associé à chacune des brides de fixation (3, 4) et
- un dispositif de comparaison et de commutation (12) qui est alimenté en permanence avec le signal de mesure (MS1) et le signal de mesure (MS2) étalonné.

2. Ensemble enregistreur de couple de rotation à double bride selon la revendication 1, dans lequel le premier dispositif de mesure de vitesse de rotation (5, 6) fonctionne selon un principe de mesure différent de celui du second dispositif de mesure de vitesse de rotation (7, 8).

3. Procédé de mesure de couple de rotation pour la mesure précise d'un couple de fonctionnement pour un ensemble enregistreur de couple de rotation à double bride selon la revendication 1, dans lequel le procédé de mesure de couple de rotation présente les étapes de procédé suivantes :
a) mesure d'un premier signal de couple de rotation (MS1) au niveau de l'élément de mesure (1),
b) détermination d'un second signal de couple de rotation (MS2) à partir de l'angle de torsion calculé par les dispositifs de mesure de vitesse de rotation (5, 6 ; 7, 8) entre les brides de fixation (3, 4),
c) étalonnage du second signal de couple de rotation (MS2) actuel sur la valeur actuelle du premier signal de couple de rotation (MS1),
d) comparaison permettant de déterminer si la valeur du second couple de rotation (MS2) correspond à la valeur du premier couple de rotation (MS1), si tel n'est pas le cas, l'étape de procédé c est répétée,
e. vérification d'un comportement anormal du premier signal de couple de rotation (MS1), si une anomalie du signal de couple de rotation (MS1) est détectée, le signal de couple de rotation (MS1) est désactivé et le signal de couple de rotation (MS2) est activé.
